# FASCICULE DE BREVET EUROPEEN

(11) **EP 1 770 078 B1**
(45) Date de publication et mention de la délivrance du brevet: **28.12.2016**
(21) Numéro de dépôt: 06121049.8
(22) Date de dépôt: 21.09.2006
(51) Int. Cl.: C04B 41/85, C04B 41/89

(54) **Procédé de protection contre l'usure d'une pièce thermostructurale en matériau composite à matrice céramique**
Verfahren zum Schutz eines hochtemperaturbeständigen Werkstücks aus einem Verbundwerkstoff mit keramischer Matrix vor Verschleiss
Process for wear protection of a high temperature resistant ceramic matrix composite material

(30) Priorité: 28.09.2005 FR 0509880
(43) Date de publication de la demande: 04.04.2007
(73) Titulaire: SNECMA, 75015 Paris (FR)
(72) Inventeur: Arnold, Thibault, 77300, Fontainebleau (FR); Benoit, Joël, 77240, Cesson la Foret (FR); Biramben, Arnaud, 75012, Paris (FR); Marty, Christian, 92100, Boulogne (FR)
(74) Mandataire: Cardy, Sophie Marie

(56) Documents cités:
- US-A1- 2002 096 407
- US-B1- 6 177 186
- PATENT ABSTRACTS OF JAPAN vol. 1996, no. 05, 31 mai 1996 (1996-05-31) & JP 08, 026859, A, (TOKAI CARBON CO LTD), 30 janvier 1996 (1996-01-30)

## Description

L'invention concerne un procédé de protection contre l'usure d'une pièce thermostructurale en matériau composite à matrice céramique constitué par un renfort de fibres densifié par une matrice en matériau réfractaire qui comble au moins partiellement la porosité du renfort fibreux, le revêtement et la pièce obtenus par ce procédé.

Les matériaux composites thermostructuraux sont caractérisés par des propriétés mécaniques les rendant aptes à constituer des pièces de structure, tout en conservant ces propriétés mécaniques à des températures élevées. Ils sont constitués par un renfort de fibres densifié par une matrice en matériau réfractaire qui comble au moins partiellement la porosité du renfort fibreux. Le choix des matériaux pour les fibres et la matrice est typiquement dirigé parmi le carbone et les céramiques.

Parmi les exemples de matériaux composites thermostructuraux on peut citer : les composites carbone/carbone (C/C) et les composites à matrice céramique (CMC) tels que C/SiC ou SiC/SiC (renfort en fibres de carbone ou SiC et matrice carbure de silicium) ou C/C-SiC (renfort en fibres de carbone et matrice mixte de carbone et carbure de silicium) ou C/Si-B-C (renfort en fibres de carbone et matrice autocicatrisante) ou encore C/C-SiC-Si (composite C/C siliciuré par réaction avec Si).

L'invention porte sur la réalisation de revêtements de protection destinés à améliorer la résistance à l'usure par frottement à haute température (entre 500°C et 1000°C ou plus) de matériaux composites à matrice céramique (CMC), en particulier comprenant du carbure de silicium.

En particulier, on constate que ces matériaux CMC présentent une résistance à l'usure par frottement à haute température limitée pour certaines applications, notamment comme volet mobile primaire (commandé ou suiveur) d'une tuyère d'éjection de turboréacteur.

Le document US 2002/096407 divulgue un procédé de protection contre l'oxydation d'un matériau composite carbone/carbone.

Les tentatives de modification du matériau CMC, par changement de la composition de la matrice et/ou des fibres ou de la structure du matériau n'ont pas apporté d'améliorations suffisantes.

La présente invention a pour objectif de fournir un procédé de protection contre l'usure d'une pièce thermostructurale en matériau composite à matrice céramique permettant de surmonter les inconvénients de l'art antérieur et en particulier offrant une efficacité élevée.

Selon la présente invention, ce but est atteint grâce à un procédé caractérisé en ce que l'on réalise un revêtement par les étapes suivantes :
a) on fournit un mélange comprenant de la silice colloïdale, de la poudre d'un matériau céramique réfractaire silico-alumineux et/ou alumineux et de l'eau ;
b) on applique sur la pièce au moins une couche du mélange ;
c) on réalise le séchage de la couche ; et
d) on place la pièce à une température supérieure à 1000°C, ce qui permet de réaliser la cuisson de la couche et de former un revêtement en émail.

De cette manière, on comprend que par la simple application d'un mélange à base aqueuse, son séchage et sa cuisson à haute température, on réalise un revêtement en émail apportant la protection contre l'usure par frottement à haute température.

Cette solution présente aussi l'avantage supplémentaire d'être très simple de mise en oeuvre et de pouvoir être industrialisée pour un coût de revient faible.

En outre, on constate que le procédé selon l'invention permet de réaliser un revêtement non seulement résistant à l'usure par frottement en température, mais également un revêtement pouvant être utilisé pour modifier les caractéristiques d'émissivité de la zone revêtue par l'ajout d'additifs et/ou de charges choisies à cet effet. Par exemple, si le dépôt est réalisé sur la surface interne (en regard de l'axe) des volets, on peut décider d'utiliser des charges augmentant l'émissivité pour réduire les réflexions engendrées par la partie interne du moteur. Alternativement ou cumulativement, si le dépôt est réalisé sur la surface externe des volets, on peut décider d'utiliser des charges diminuant l'émissivité et la température apparente pour réduire également la signature infrarouge du réacteur.

Globalement, grâce à la solution selon la présente invention, il est donc possible de réaliser un revêtement de type émail sur toute pièce CMC, afin de renforcer ses propriétés de résistance à l'usure par frottement à haute température.

On constate en particulier des résultats nettement améliorés lorsque le mélange est appliqué sur une couche superficielle de la pièce comprenant du carbure de silicium (SiC) et/ou du carbure de bore (BC).

On notera que, selon l'application envisagée, le mélange peut être appliqué sur tout ou partie de la surface extérieure d'une pièce. Par exemple, dans le cas d'un divergent de tuyère de propulseur, le mélange peut être appliqué seulement sur les surfaces en frottement, en particulier que sur la surface externe ou interne des volets mobiles du divergent.

De préférence dans le mélange, le matériau céramique réfractaire appartient à la famille comportant les silicates d'aluminium (par exemple la cyanite, en particulier la mullite, mais aussi la silimanite) et l'alumine.

De préférence, le matériau céramique réfractaire est de la mullite et le mélange contient également de l'acide orthophosphorique H₃PO₄.

La couche présente une épaisseur de l'ordre de 200µm (après séchage).

Le procédé selon l'invention comporte en outre, avant l'étape d), une étape de ponçage avec un support abrasif contenant du nitrure de bore, afin de réaliser une surface lisse et d'améliorer le glissement à la surface du revêtement.

Le présent exposé divulgue également un revêtement de protection contre l'usure d'une pièce thermostructurale en matériau composite à matrice céramique, réalisé selon le procédé décrit précédemment.

En particulier, le présent exposé porte aussi sur un revêtement de protection contre l'usure d'une pièce thermostructurale en matériau composite à matrice céramique, caractérisé en ce qu'il forme un émail contenant des matières réfractaires silico-alumineuses et/ou alumineuses.

Egalement, le présent exposé porte sur une pièce thermostructurale en matériau composite à matrice céramique, qui se caractérise en ce qu'elle comporte un revêtement de protection contre l'usure constitué d'un émail contenant des matières réfractaires silico-alumineuses et/ou alumineuses.

Dans l'un des deux cas qui précèdent, de préférence, la couche superficielle de la pièce située sous le revêtement comprend du carbure de silicium (SiC) et/ou du carbure de bore (BC).

Par exemple, la pièce divulguée dans le présent exposé constitue un volet mobile de tuyère d'éjection à section variable par étranglement de turboréacteur dont au moins une partie de la surface (externe et/ou interne) est munie d'un revêtement de protection contre l'usure.

D'autres avantages et caractéristiques de l'invention ressortiront à la lecture de la description suivante faite de façon non limitative en référence à un exemple de réalisation et en référence aux dessins annexés dans lesquels :
- la figure 1 est une vue partielle en projection depuis l'arrière d'un turboréacteur ; et
- la figure 2 représente les résultats d'un test d'usure.

### Exemple de réalisation

On a réalisé un mélange entre les différents constituants suivants :
- silice colloïdale de surface spécifique de 200 à 300 m²/g,
- mullite (2 SiO₂, 3 Al₂O₃) de particules de diamètre < 40µm,
- eau, et
- acide orthophosphorique H₃PO₄.

Ces constituants sont mélangés de façon à obtenir une suspension homogène qui est tamisée à 50 micromètres pour éliminer les grumeaux.

On obtient un mélange dans des proportions donnant la composition du revêtement de type mullite du Tableau 1 ci-dessous.

**Tableau 1**

| Revêtement de type | Composition (% en poids) | | | |
|---|---|---|---|---|
| | SiO₂ | Al₂O₃ | H₂O | H₃PO₄ |
| Mullite | 33.5 (± 10%) | 31.5 (± 10%) | 27.3 (± 10%) | 7.7 (± 10%) |
| Margot | 33.8 (± 10%) | 44 (± 10%) | 22.2 (± 10%) | - |
| Alumine | 20 (± 10%) | 50 (± 10%) | 30 (± 10%) | - |

Ce mélange forme une solution aqueuse que l'on peut déposer en une ou plusieurs couches de multiples façons : projection au pistolet, application au pinceau ou encore au tampon et/ou par immersion (au trempé).

L'application de ce mélange est ensuite réalisée assez rapidement (dans les 10 à 15 minutes après le début de la préparation) car le mélange s'épaissit dans le temps.

La projection a été réalisée avec un pistolet dont la buse est placée à une distance de projection par rapport à la pièce entre 25 et 35 mm, sous une pression de 2 bars.

Une épaisseur optimale pour l'application spécifique des volets de tuyère en CMC correspond à 200 micromètres (épaisseur après séchage), en une ou deux couches. En effet, une surépaisseur provoque des craquelures et un manque d'épaisseur ne permet pas de s'affranchir des aspérités du matériau de la pièce.

Il faut noter qu'à ce stade, un dépôt présentant des déficiences peut être éliminé par un simple lavage et, après séchage, l'application d'une nouvelle couche est possible.

Par ailleurs, il est préférable d'appliquer deux (ou plus) couches fines du mélange, avec une étape intermédiaire de séchage, plutôt qu'appliquer une seule couche épaisse du mélange avant de réaliser l'opération de séchage, ceci afin d'éviter les risques de craquelures du revêtement.

Le dépôt étant réalisé sur la pièce, celle-ci est séchée dans une étuve à 60 °C pendant 30 minutes.

Lors de ce séchage, les particules se rapprochent entre elles et le mélange forme comme un mortier dans lequel la silice est la charge granulaire et la mullite est le ciment.

Après séchage, le dépôt est surfacé et lustré à l'aide d'un papier abrasif enduit de nitrure de bore: de cette façon on homogénéise l'épaisseur du dépôt en arasant sa surface et on améliore le glissement du revêtement (un autre nitrure tel que le nitrure d'aluminium ou le nitrure de silicium peut aussi être utilisé).

La surface est ainsi plus lisse avant de réaliser la cuisson qui consiste à placer directement la pièce dans un four à plus de 1000 °C (en particulier 1100 °C) pendant 5 à 15 minutes selon la masse de la pièce.

Ces étapes ont été mises en oeuvre sur toute la surface de deux pièces en vue de la réalisation d'un test en résistance à l'usure : une plaque formant une piste de 40 sur 50 mm, ainsi qu'un pion de longueur 30 mm et de largeur 8 mm.

Le test de résistance à l'usure a consisté à placer de façon fixe le pion à l'extrémité duquel la piste est en contact et subi un mouvement translation rectiligne alternatif.

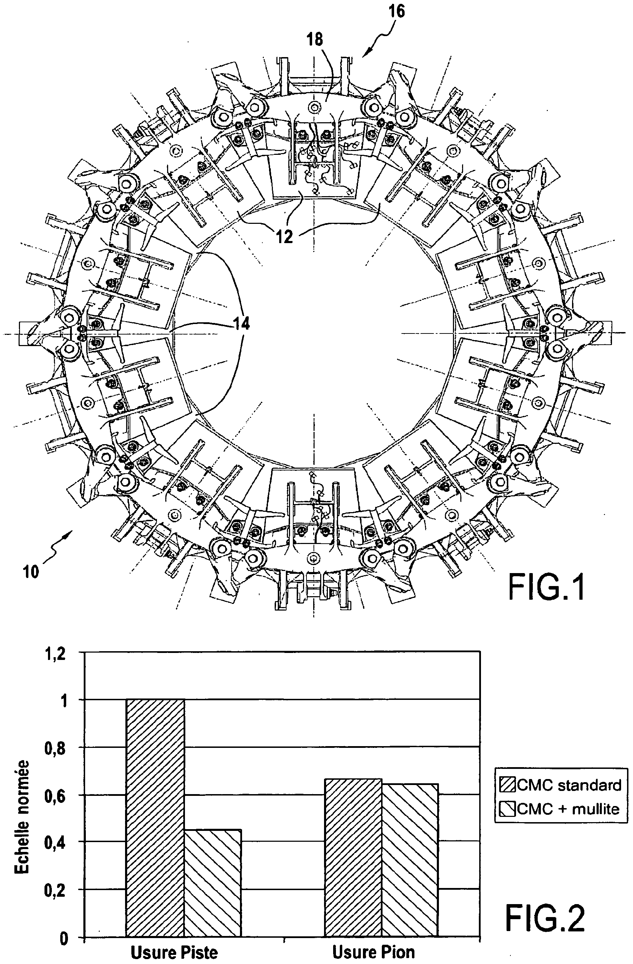

La figure 2 montre les résultats d'usure pour des conditions de test parfaitement identiques entre un matériau CMC standard (en l'espèce C/SiC) et le même matériau recouvert d'un revêtement de type mullite.

Cette représentation sous forme d'histogramme est normée à partir de la valeur d'usure de la piste pour le matériau CMC standard prise comme référence.

D'après ces résultats, on constate que l'usure de la piste est significativement réduite de plus de la moitié lorsqu'elle est réalisée avec adjonction d'un revêtement de protection contre l'usure. L'usure du pion est également moins importante en présence du revêtement : cette différence en l'espèce relativement minime s'explique également par les conditions de l'essai.

Pour illustrer une application possible du procédé de protection contre l'usure selon l'invention, on se reporte à la figure 1 sur laquelle est visible une tuyère 10 présentée dans sa position la plus fermée, formant un cône convergeant.

Cette tuyère 10 comporte essentiellement des volets commandés 12 et des volets suiveurs 14, mis en mouvement par un système de commande 16, comprenant notamment des leviers de commande 18.

En particulier, la tuyère 10 présentée sur la figure 1 peut comporter des volets commandés 12 réalisés en CMC et des volets suiveurs 14 métalliques : dans ce cas, on constate tout particulièrement une usure des surfaces des volets commandés 12 en contact par frottement sur les volets suiveurs 14 métalliques.

Cependant, cette tuyère 10 peut également comporter des volets commandés 12 et des volets suiveurs 14 réalisés dans leur ensemble en matériau CMC.

S'il s'agit d'un turboréacteur avec post-combustion, les volets se trouvent en sortie de flux primaire dans un flux chaud allant de 700°C à 950°C.

Dans ce cas, on réalise selon l'invention un revêtement de protection contre l'usure tel que celui décrit précédemment, soit sur toute la surface des deux types de volets 12, 14, soit uniquement sur la surface intérieure des volets commandés 12 et uniquement sur la surface extérieure des volets suiveurs 14, ou encore uniquement sur les zones de ces surfaces amenées à venir en contact l'une avec l'autre dans les différentes positions possibles.

Le matériau céramique réfractaire est bien entendu choisi de façon à présenter un coefficient de dilatation sensiblement identique à celui du matériau composite à matrice céramique de la pièce sur laquelle le revêtement est réalisé.

Dans le cas où la pièce à protéger est en composite C/C, l'application du mélange peut être réalisée directement sur la pièce ou après formation d'une sous-couche réfractaire, en particulier une sous-couche en SiC.

Bien entendu, la présente invention ne se limite pas aux volets de tuyère, mais elle peut s'appliquer à toutes les pièces thermostructurales en matériau composite à matrice céramique, notamment comprenant du SiC, ledit matériau étant constitué par un renfort de fibres densifié par une matrice en matériau réfractaire qui comble au moins partiellement la porosité du renfort fibreux, et qui sont susceptibles d'être soumises à une usure par frottement sur toute ou partie de leur surface : en particulier, l'invention s'applique aux parois des chambres de combustion, carters, bras post-combustion......

## Revendications

1. Procédé de protection contre l'usure d'une pièce thermostructurale en matériau composite à matrice céramique constitué par un renfort de fibres densifié par une matrice en matériau réfractaire qui comble au moins partiellement la porosité du renfort fibreux, **caractérisé en ce que** l'on réalise un revêtement par les étapes suivantes :
a) on fournit un mélange comprenant de la silice colloïdale, de la poudre d'un matériau céramique réfractaire silico-alumineux et/ou alumineux et de l'eau ;
b) on applique sur la pièce au moins une couche du mélange ;
c) on réalise le séchage de la couche ;
d) on ponce la couche séchée avec un support abrasif contenant du nitrure de bore, d'aluminium ou de silicium ; et
e) on place la pièce à une température supérieure à 1000°C, ce qui permet de réaliser la cuisson de la couche et de former un revêtement en émail,
ledit revêtement ayant une épaisseur de l'ordre de 200 µm.

2. Procédé selon la revendication 1, **caractérisé en ce que** le mélange comporte en outre des charges formant un additif modifiant les caractéristiques d'émissivité du revêtement.

3. Procédé selon la revendication 1 ou 2, **caractérisé en ce que** le mélange est appliqué sur une couche superficielle de la pièce comprenant du carbure de silicium (SiC).

4. Procédé selon la revendication 1 ou 2, **caractérisé en ce que** le mélange est appliqué sur une couche superficielle de la pièce comprenant du carbure de bore (BC).

5. Procédé selon l'une quelconque des revendications 1 à 4, **caractérisé en ce que** dans le mélange, le matériau céramique réfractaire appartient à la famille comportant les silicates d'aluminium et l'alumine.

6. Procédé selon l'une quelconque des revendications 1 à 5, **caractérisé en ce que** dans le mélange, le matériau céramique réfractaire est de la mullite (3Al₂O₃, 2SiO₂).

7. Procédé selon l'une quelconque des revendications 1 à 6, **caractérisé en ce que** le mélange comporte également de l'acide orthophosphorique (H₃PO₄).

8. Procédé selon l'une quelconque des revendications précédentes, **caractérisé en ce que** la pièce constitue un volet mobile (12, 14) de tuyère d'éjection (10) à section variable par étranglement de turboréacteur dont au moins une partie de la surface externe est munie dudit revêtement de protection contre l'usure.

9. Procédé selon l'une quelconque des revendications précédentes, **caractérisé en ce que** la pièce appartient à une tuyère.

10. Procédé selon l'une quelconque des revendications précédentes, **caractérisé en ce que** la pièce appartient à un turboréacteur.

## Patentansprüche

1. Verfahren zum Schutz eines hochtemperaturbeständigen Werkstücks aus Verbundwerkstoff mit keramischer Matrix vor Verschleiß, bestehend aus einer Faserverstärkung, die durch eine Matrix aus feuerfestem Material verdichtet ist, die zumindest teilweise die Porosität der Faserverstärkung ausfüllt, **dadurch gekennzeichnet, dass** ein Überzug durch die folgenden Schritte hergestellt wird:
a) Bereitstellung eines Gemisches, umfassend kolloidale Kieselsäure, Pulver aus einem feuerfesten keramischen Silizium-Aluminium- und/oder Aluminiummaterial und Wasser,
b) Aufbringen mindestens einer Schicht des Gemisches auf das Werkstück,
c) Trocknen der Schicht,
d) Abschleifen der getrockneten Schicht mit einem Schleifmittel, das Bor-, Aluminium- oder Siliziumnitrid enthält, und
e) Aussetzen des Werkstücks einer Temperatur über 1000 °C, wodurch es möglich ist, das Brennen der Schicht durchzuführen und einen Email-Überzug zu bilden,
wobei der Überzug eine Dicke von ungefähr 200 µm hat.

2. Verfahren nach Anspruch 1, **dadurch gekennzeichnet, dass** das Gemisch ferner Füllstoffe umfasst, die einen Zusatz bilden, der die Emissionsmerkmale des Überzugs verändert.

3. Verfahren nach Anspruch 1 oder 2, **dadurch gekennzeichnet, dass** das Gemisch auf eine Oberflächenschicht des Werkstücks, umfassend Siliziumcarbid (SiC), aufgebracht wird.

4. Verfahren nach Anspruch 1 oder 2, **dadurch gekennzeichnet, dass** das Gemisch auf eine Oberflächenschicht des Werkstücks, umfassend Borcarbid (BC), aufgebracht wird.

5. Verfahren nach einem der Ansprüche 1 bis 4, **dadurch gekennzeichnet, dass** in dem Gemisch das feuerfeste keramische Material der Familie angehört, die die Aluminium- und Aluminiumoxid-Silikate umfasst.

6. Verfahren nach einem der Ansprüche 1 bis 5, **dadurch gekennzeichnet, dass** in dem Gemisch das feuerfeste keramische Material Mullit (3Al₂O₃, 2SiO₂) ist.

7. Verfahren nach einem der Ansprüche 1 bis 6, **dadurch gekennzeichnet, dass** das Gemisch auch Orthophosphorsäure (H₃PO₄) umfasst.

8. Verfahren nach einem der vorhergehenden Ansprüche, **dadurch gekennzeichnet, dass** das Werkstück eine bewegliche Klappe (12, 14) einer Ejektordüse (10) mit variablem Querschnitt durch Drosselung eines Turbotriebwerks darstellt, wobei mindestens ein Teil der Außenfläche mit dem Überzug zum Schutz vor Verschleiß versehen ist.

9. Verfahren nach einem der vorhergehenden Ansprüche, **dadurch gekennzeichnet, dass** das Werkstück einer Düse angehört.

10. Verfahren nach einem der vorhergehenden Ansprüche, **dadurch gekennzeichnet, dass** das Werkstück einem Turbotriebwerk angehört.

## Claims

1. A method of protecting a thermostructural part made of ceramic matrix composite material against wear, the material being constituted by fiber reinforcement densified by a matrix of refractory material that fills in the pores of the fiber material, at least in part, the method being **characterized in that** a coating is made by the following steps:
a) providing a mixture comprising colloidal silica, a powdered silico-aluminous and/or aluminous refractory ceramic material, and water;
b) applying at least one layer of the mixture on the part;
c) drying the layer;
d) grinding the dried layer with an abrasive medium containing boron nitride, aluminum nitride or silicon nitride; and
e) placing the part at a temperature greater than 1000°C, thereby firing the layer and forming an enamel coating;
said coating having a thickness of about 200 µm.

2. A method according to claim 1, **characterized in that** the mixture further comprises a filler forming an additive modifying the emissive characteristics of the coating.

3. A method according to claim 1 or 2, **characterized in that** the mixture is applied on a surface layer of the part that comprises silicon carbide (SiC).

4. A method according to claim 1 or 2, **characterized in that** the mixture is applied on a surface layer of the part that comprises boron carbide (BC).

5. A method according to anyone of claims 1 to 4, **characterized in that** the refractory ceramic material in the mixture belongs to the family comprising aluminum silicates and alumina.

6. A method according to any one of claims 1 to 5, **characterized in that** the refractory ceramic material in the mixture is mullite (3Al₂O₃, 2SiO₂).

7. A method according to any one of claims 1 to 6, **characterized in that** the mixture also includes orthophosphoric acid (H₃PO₄).

8. A method according to any one of the preceding claims, **characterized in that** the thermostructural part constitutes a moving flap (12, 14) of a turbojet exhaust nozzle (10) of section that is variable by throttling, the flap having at least a portion of its outside surface provided with said protective coating against wear.

9. A method according to any one of the preceding claims, **characterized in that** the thermostructural part belongs to a nozzle.

10. A method according to any one of the preceding claims, **characterized in that** the thermostructural part belongs to a turbojet.
